# DEMANDE DE BREVET EUROPEEN

(11) **EP 1 298 784 A1**
(43) Date de publication de la demande: **02.04.2003**
(21) Numéro de dépôt: 02292266.0
(22) Date de dépôt: 17.09.2002
(51) Int. Cl.: H02P 6/16, B62D 5/04

(54) **Système de direction assistée éléctrique commandé par impulsions**

(30) Priorité: 26.09.2001 FR 0112379
(71) Demandeur: SNR ROULEMENTS, F-74010 Annecy (FR)
(72) Inventeur: Desbiolles, Pascal, 74570 Thorens-Glieres (FR); Nicot, Christophe, 74600 Quintal (FR); Friz, Achim, 74600 Seynod (FR)
(74) Mandataire: Geismar, Thierry

(57) **Abrégé**

L'invention concerne un système de direction assistée électrique permettant d'appliquer un couple d'assistance pour le déplacement angulaire des roues d'un véhicule, ledit couple étant appliqué par un moteur à commutation électronique (2) comprenant P phases et N paires de pôles, ledit système comprenant en outre un dispositif de commande du moteur (2) comprenant un codeur multipolaire circulaire (17) comprenant une piste multipolaire principale (17a) et une piste multipolaire de commutation (17b) comprenant des singularités magnétiques (17b1-17b6) équiréparties angulairement, un capteur fixe (19) apte à délivrer des signaux digitaux A, B carrés en quadrature et un signal C sous forme de 2*P*N impulsions par tour du rotor (3), un circuit de commutation (20) des courants dans les enroulements de phase du moteur (2) et un circuit de commande (21) du circuit de commutation (20).

## Description

L'invention concerne un système de direction assistée électrique permettant d'appliquer un couple d'assistance pour le déplacement angulaire des roues d'un véhicule, ledit couple étant fournit par un moteur à commutation électronique comprenant P phases et N paires de pôles.

L'invention s'applique particulièrement aux systèmes de direction conventionnels comprenant une colonne de direction associée mécaniquement aux roues par l'intermédiaire d'un pignon de crémaillère et d'une crémaillère, de sorte à transformer le mouvement de rotation du volant associé à la colonne en déplacement angulaire des roues.

L'invention s'applique également aux systèmes de direction découplée dans lequel il n'y a pas de liaison mécanique directe entre le volant et les roues, que le véhicule soit réel ou appartienne à un système de simulation.

Cette simulation peut être d'objet ludique, liée à un apprentissage dans les auto-écoles ou bien encore liée à une simulation de conduite interactive pour les besoins de constructeurs automobiles.

Du fait de leur puissance massique importante, les moteurs à commutation électronique, ou moteur brushless, sont particulièrement adaptés pour être utilisés dans un système de direction assistée électrique.

Dans le cadre de cette application, il est nécessaire de commander précisément la commutation du courant dans les phases de ces moteurs afin d'obtenir un couple qui soit optimal et égal à une consigne avec le moins de modulations possibles.

Pour ce faire, il est connu d'utiliser un capteur comprenant trois éléments sensibles disposés en regard d'un codeur comportant N paires de pôles, ledit codeur étant mis en rotation par le moteur.

Dans le cas d'un moteur triphasé, en prévoyant que les trois éléments sensibles soient déphasés l'un par rapport à l'autre d'un angle mécanique permettant de fournir trois signaux électriques déphasés de 120° électriques, il est possible de commander la commutation entre les phases du moteur au moment opportun.

Mais ce type de réalisations peut provoquer des modulations du couple du moteur qui sont notamment dues :
- au couple de réluctance du moteur ;
- aux défauts de commutation du courant d'une phase à l'autre en fonction de la vitesse de rotation du moteur ;
- l'absence de chevauchement des FEM trapézoïdales.

On connaît, notamment du document FR-2 749 452, un dispositif de commande d'un moteur électrique à commutation électronique qui permet de s'affranchir partiellement des défauts de couple liés à la commutation du courant d'une phase à l'autre.

Mais, pour s'affranchir de la modulation de couple liée à la conception du moteur (couple de réluctance et absence de chevauchement des FEM trapézoïdales), il devient alors nécessaire de connaître finement la position absolue du rotor pour contrôler le courant dans les phases en fonction de la position du rotor.

Une telle stratégie de commande nécessite donc un capteur supplémentaire donnant une position haute résolution en plus de celui pilotant la commutation.

Ce type de solution, en prévoyant deux capteurs, conduit à des contraintes d'intégration importantes et à un coût non optimisé. En outre, elle peut être pénalisante en terme d'inertie mécanique du rotor.

L'invention vise notamment à résoudre ces inconvénients en proposant un système de direction assistée électrique comprenant un codeur à deux pistes mobile en rotation devant un capteur unique fixe en rotation, ledit capteur étant apte, après traitement électronique adéquat, d'une part à délivrer des signaux de commutation du courant dans les phases et d'autre part des signaux de position haute résolution pour permettre le pilotage du courant alimentant les phases, et ce avec une résolution suffisamment fine pour éviter les modulations de couple du moteur.

En outre, l'invention est applicable aux systèmes de direction assistée électrique sans induire de contraintes d'intégration importantes.

A cet effet, l'invention propose un système de direction assistée électrique permettant d'appliquer un couple d'assistance pour le déplacement angulaire des roues d'un véhicule, ledit couple étant appliqué par un moteur à commutation électronique comprenant P phases et N paires de pôles, ledit système comprenant en outre un dispositif de commande du moteur comprenant :
- un codeur multipolaire circulaire destiné à effectuer, conjointement au rotor du moteur, une pluralité de tours autour de son axe de rotation, ledit codeur comprenant une piste multipolaire principale et une piste multipolaire de commutation comprenant des singularités magnétiques équiréparties angulairement, les pistes principale et de commutation étant concentriques sur le codeur ;
- un capteur fixe disposé en regard et à distance d'entrefer du codeur, ledit capteur comprenant au moins trois éléments sensibles dont au moins deux sont positionnés en regard de la piste principale de sorte à délivrer des signaux digitaux A, B carrés en quadrature et au moins un est positionné en regard de la piste de commutation de sorte à délivrer un signal C sous forme de 2*P*N impulsions par tour du rotor ;
- un circuit de commutation des courants dans les enroulements de phase du moteur comportant 2*P*N interrupteurs ;
- un circuit de commande du circuit de commutation qui :
   - à partir du signal C fournit des signaux de commutation des interrupteurs ; et
   - à partir des signaux A, B et en fonction d'une consigne de couple définit une consigne de courant qui pilote le courant alimentant les enroulements de phase du moteur.

D'autres objets et avantages de l'invention apparaîtront au cours de la description qui suit, faite en référence aux dessins annexés, dans lesquels :
- la figure 1 est une représentation schématique d'un système de direction assistée électrique selon un premier mode de réalisation ;
- la figure 2 est une représentation schématique d'un système de direction assistée électrique selon un deuxième mode de réalisation ;
- la figure 3 est une vue en coupe longitudinale d'un moteur à commutation électronique utilisable dans les modes de réalisation des figures 1 et 2 ;
- la figure 4 est une vue en coupe longitudinale partielle montrant un réducteur associable à un moteur électrique utilisable dans les modes de réalisation des figures 1 et 2, de sorte à former un motoreducteur ;
- la figure 5 est une vue partielle agrandie de la figure 4 ;
- la figure 6 est une vue en coupe longitudinale partielle d'un système de direction assistée électrique selon un troisième mode de réalisation ;
- la figure 7 est une représentation synoptique d'un dispositif de commande d'un moteur à commutation électronique selon la figure 3 comprenant 3 phases et une paire de pôles ;
- la figure 8 est une vue schématique de face d'un codeur utilisable dans le dispositif de commande de la figure 7 ;
- la figure 9 représente les signaux A, B et C délivrés par le capteur lors de la rotation du codeur représenté sur la figure 8.

L'invention concerne un système de direction assistée électrique, notamment de véhicule automobile, permettant d'appliquer un couple d'assistance pour le déplacement angulaire des roues du véhicule, ledit couple étant appliqué par un moteur à commutation électronique 2 ou moteur brushless comprenant P phases.

Le moteur 2 comprend typiquement un rotor 3 portant N paires de pôles magnétiques Nord/Sud et un stator 4 portant P bobines 5 formées respectivement d'un enroulement de phase, le rotor 3 étant mis en rotation de façon connue en commandant l'alimentation électrique dans les P enroulements de phases.

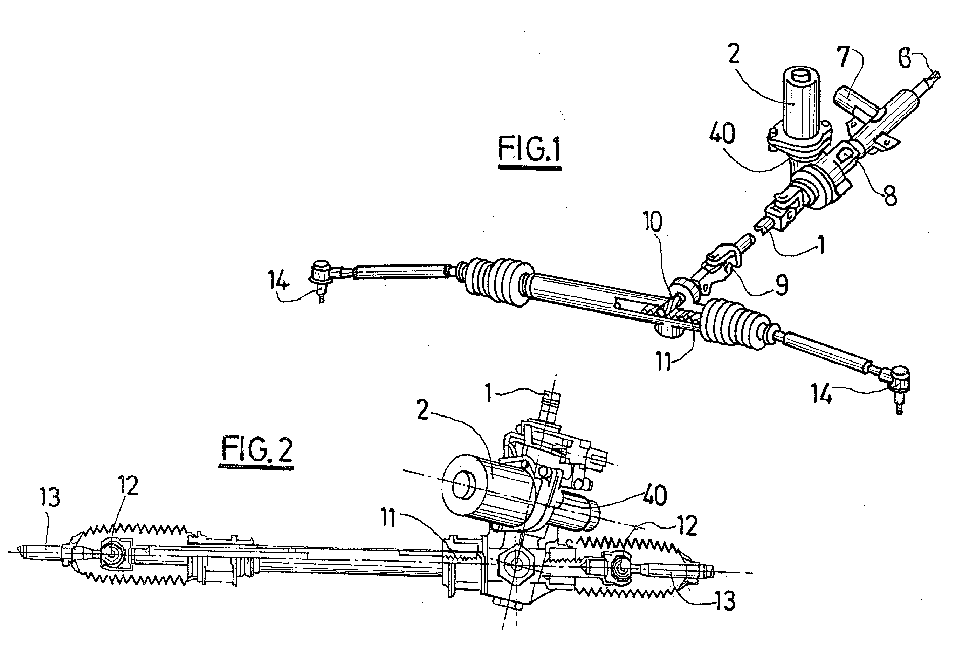

Les figures 1, 2 et 6 représentent trois modes de réalisation d'un système de direction assistée électrique.

Dans le premier mode de réalisation (figure 1), le système comprend une colonne 1 pourvue d'une partie extrême cannelée 6 destinée à permettre l'association du volant de direction à la colonne 1.

A l'opposé de cette partie extrême et en dessous d'un dispositif de blocage 7 en rotation, un moteur à commutation électronique 2 est prévu pour assister la rotation de l'arbre de transmission de la colonne 1.

Cette assistance, que l'on détaillera par la suite, est notamment commandée par un dispositif capteur de couple 8, formé par exemple d'une barre de torsion et d'un capteur associé, destiné à mesurer le couple appliqué sur la colonne 1 par le volant, et donc à définir le niveau d'assistance requis.

A l'opposé de la partie extrême cannelée 6, la colonne 1 est associée, par exemple au moyen d'un cardan 9, à un pignon de crémaillère 10 destiné à venir s'engager dans la crémaillère de direction 11 de sorte à transformer la rotation de la colonne 1 en un déplacement linéaire de la crémaillère 11.

Les extrémités de la crémaillère 11 sont respectivement associées, par exemple par l'intermédiaire d'une rotule 12, à une biellette de direction 13 portant à l'opposé les rotules de direction 14 qui permettent le déplacement angulaire des roues dans un sens ou dans l'autre en fonction du sens de déplacement de la crémaillère 11.

Le deuxième mode de réalisation (figure 2) diffère du premier en ce que le moteur 2 est associé à la colonne 1 au niveau du pignon de crémaillère 10.

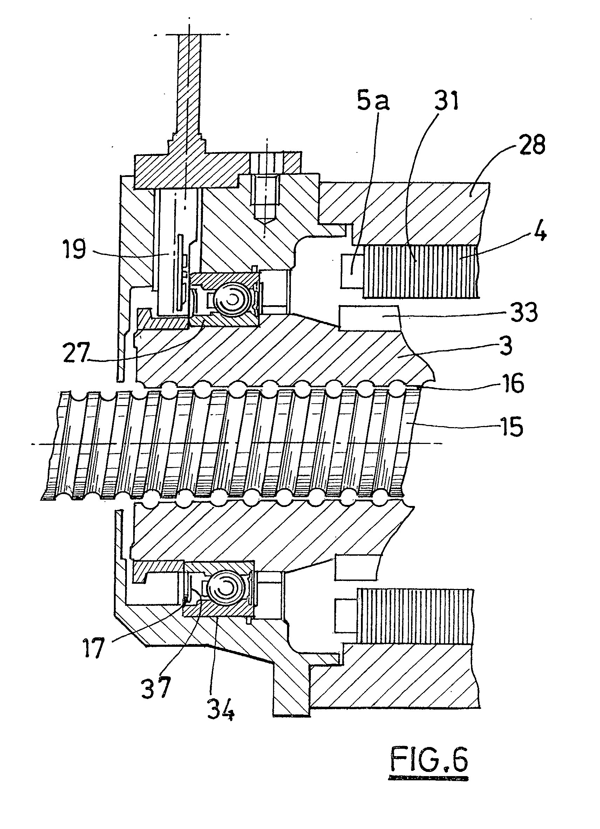

Le troisième mode de réalisation (figure 6) diffère du premier en ce que le moteur 1 assure l'assistance de direction au niveau de la crémaillère 11 en actionnant directement celle-ci ou un organe mécanique, tel qu'une vis à billes 15, associé colinéairement à celle-ci.

A cet effet, le rotor 3 présente un alésage 16 dans lequel la crémaillère 11 ou la vis à billes 15 est introduite pour être déplacée en translation par la rotation du rotor 3.

Selon l'invention, le système de direction assistée électrique comprend un dispositif de commande de la commutation du courant entre les phases du moteur 2.

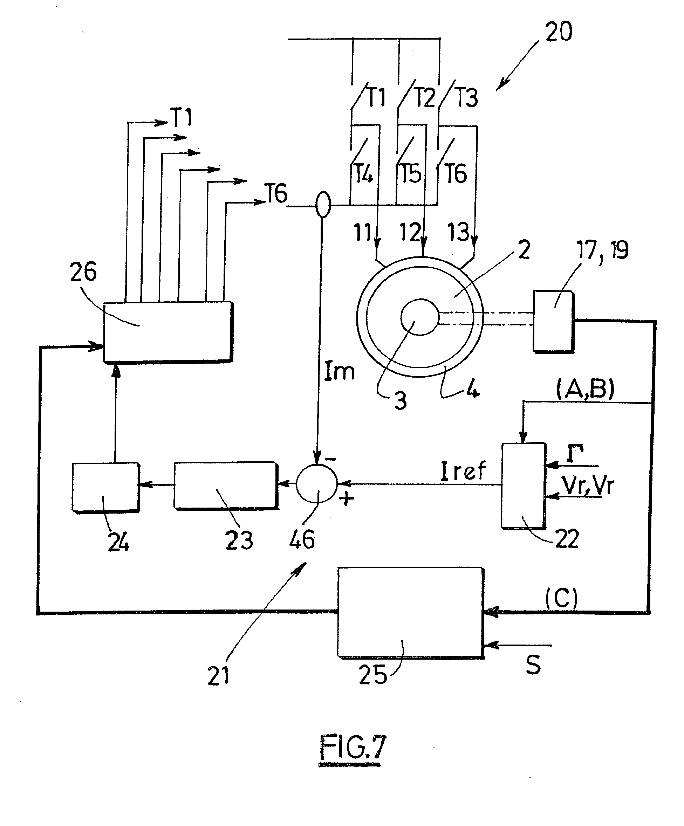

Sur la figure 7 est représenté un schéma synoptique d'un dispositif de commande d'un tel moteur 2 à trois phases et une paire de pôles.

Le dispositif comprend un codeur multipolaire circulaire 17 destiné à effectuer, conjointement au rotor 3, une pluralité de tours autour de son axe de rotation.

Le codeur 17 comprend une piste principale 17a et une piste de commutation 17b comprenant des singularités magnétiques 17b1-17b6 équiréparties angulairement, les pistes principale 17a et de commutation 17b étant disposées concentriquement sur le codeur 17.

Dans un exemple particulier, le codeur 17 est formé d'un anneau magnétique multipolaire sur lequel est aimantée une pluralité de paires de pôles Nord et Sud 18 équiréparties avec une largeur angulaire constante de sorte à former les pistes principale 17a et de commutation 17b, une singularité magnétique 17b1-17b6 de la piste de commutation 17b étant formée de deux paires de pôles qui sont différentes des autres.

Le dispositif de commande comprend en outre un capteur 19 fixe disposé en regard et à distance d'entrefer du codeur 17.

Le capteur 19 comprend au moins trois éléments sensibles dont au moins deux sont positionnés en regard de la piste principale 17a et au moins un est positionné en regard de la piste de commutation 17b.

Dans un exemple particulier, les éléments sensibles sont choisis parmi le groupe comprenant les sondes à effet Hall, les magnétorésistances, les magnétorésistances géantes.

Le capteur 19 utilisé est apte à délivrer deux signaux électriques S1, S2 périodiques en quadrature par l'intermédiaire des éléments sensibles disposés en regard de la piste principale 17a et un signal électrique S3 par l'intermédiaire des éléments sensibles disposés en regard de la piste de commutation 17b.

Le principe d'obtention des signaux S1 et S2 à partir d'une pluralité d'éléments sensibles alignés est par exemple décrit dans le document FR-2 792 403 issu de la demanderesse.

Mais des capteurs 19 comprenant deux éléments sensibles qui sont aptes à délivrer les signaux S1 et S2 sont également connus.

Le capteur 19 comprend en outre un circuit électronique qui, à partir des signaux S1, S2 et S3, délivre des signaux digitaux A, B carrés en quadrature et C sous forme de 6 (P=3 et N=1) impulsions électriques par tour du rotor (voir figure 9).

Un principe d'obtention des signaux digitaux A, B et C, ainsi que différents modes de réalisation des singularités magnétiques 17b1-17b6, sont décrits dans les documents FR- 2 769 088 et EP-0 871 014.

Par un traitement électronique adapté des signaux A, B et C, il est possible d'obtenir finement la vitesse de rotation, la position angulaire et/ou le sens de rotation du codeur 17 par rapport au capteur 19.

Suivant une réalisation, le capteur 19 comprend en outre un interpolateur, par exemple du type décrit dans le document FR-2 754 063 issu de la demanderesse, permettant d'augmenter la résolution des signaux de sortie.

Le capteur 19 peut être intégré sur un substrat en silicium ou équivalent par exemple AsGa, de sorte à former un circuit intégré et personnalisé pour application spécifique, circuit parfois désigné sous le terme ASIC pour faire référence au circuit intégré conçu partiellement ou complètement en fonction des besoins.

Bien que la description soit faite en relation avec un ensemble codeur/capteur magnétique, il est également possible de mettre en oeuvre l'invention de façon analogue en utilisant une technologie de type optique. Par exemple, le codeur 17 peut être formé d'une cible en métal ou en verre sur laquelle les pistes de référence et de commutation ont été gravées de sorte à former un motif optique analogue au motif magnétique multipolaire décrit ci-dessus, les éléments sensibles étant alors formés de détecteurs optiques.

Le dispositif de commande comprend en outre un circuit de commutation 20 des courants dans les enroulements de phase du moteur 2.

Le circuit de commutation 20 comprend 2*P*N interrupteurs T1-T6, par exemple formés chacun d'un transistor à effet de champ de type MOSFET fonctionnant à 20 kHz, qui sont disposés en pont de sorte à alimenter les enroulements de phases de façon appropriée.

Les 2*P*N interrupteurs T1-T6 peuvent être actionnés deux à deux suivant 2*P*N états possibles, le passage d'un état à un autre étant commandé par la détection d'une des 2*P*N impulsions du signal C.

Dans le mode de réalisation représenté sur la figure 7, le dispositif de commutation 20 comprend 6 interrupteurs T1-T6 qui permettent d'alimenter les trois enroulements de phase avec respectivement un courant I1, I2 et 13, I1 + I2 + I3 étant égal à 0.

La commande du dispositif de commutation 20, c'est à dire l'actionnement sélectif des interrupteurs T1-T6, est effectuée par un circuit de commande 21 qui :
- à partir du signal C fournit des signaux de commutation de la pluralité d'interrupteurs T1-T6 ; et
- à partir des signaux A, B et en fonction d'une consigne de couple Γ définit une consigne de courant Iref qui pilote le courant Im alimentant les enroulements de phase du moteur 2.

La valeur du couple Γ mesuré par le dispositif 8 prévu sur la colonne 1 est alimentée dans un circuit 22 du circuit de commande 21 ainsi qu'éventuellement la vitesse du véhicule Vv et/ou la vitesse de rotation Vr du rotor 3 pour piloter la valeur du courant Iref et donc le niveau d'assistance.

Le circuit électronique 22 à partir de la consigne de couple Γ introduit une modulation de la consigne Iref en fonction de la position du rotor issue des signaux A et B, cette modulation étant d'amplitude fonction du couple Γ et en opposition de phase par rapport à la modulation de couple intrinsèque au moteur 2, afin d'obtenir un couple utile du moteur 2 exempt de modulation.

Dans le mode de réalisation représenté, le circuit de commande 21 comprend une boucle de régulation comprenant un régulateur 23, par exemple de type PID (proportionnel intégral dérivé), une commande à largeur variable (PWM) 24 fournissant un signal carré à 20 kHz dont le rapport cyclique est commandé par le régulateur 23 et un comparateur 46 comparant le courant Im à Iref issu du circuit 22.

De façon connue, la boucle de régulation permet, à partir de Iref, de moduler le courant dans les enroulements de phase en fonction de la position du rotor 3 de sorte à obtenir un couple du moteur constamment égal à la consigne de couple Γ.

Le circuit de commande 21 peut être réalisé sous la forme d'un seul microprocesseur 25 intégrant au moins une logique de commutation du circuit de commutation 20 qui détermine la succession des ouvertures/fermetures des différents interrupteurs T1-T6. En outre, le sens de rotation voulu pour le rotor 3, par exemple représenté par le signe S du couple appliqué sur la colonne 1, est injecté dans le microprocesseur 25 de sorte à sélectionner la logique de commutation applicable.

En variante, la boucle de régulation peut être réalisée sous forme analogique.

Selon une réalisation, le circuit de commande 21, en comparant le courant Im alimentant le moteur 2 à la consigne de courant Iref, permet de moduler en largeur et en durée les signaux de commutation par l'intermédiaire d'une fonction logique ET 26.

Ainsi, à chaque détection d'une des 2*P*N impulsions du signal C, deux interrupteurs sont sélectivement fermés de sorte à alimenter les deux enroulements de phase correspondants avec le courant régulé Im.

Les instants de commutation de phases peuvent être prévus lors de la détection du front montant ou descendant de l'impulsion. En variante, et pour améliorer la précision de la commutation, on peut prévoir que le front montant soit utilisé dans un sens de rotation et le front descendant dans l'autre sens.

Le fonctionnement du dispositif de commande de la figure 7 est alors le suivant :
- le moteur 2 est alimenté par un courant Im de sorte à permettre la mise en rotation du rotor 3 et donc celle du codeur 17 associé ;
- le capteur 19 délivre les signaux A, B représentatifs notamment de la position du rotor 3 et le signal C sous forme de 6 impulsions par tour du rotor 3 ;
- à chaque détection d'une impulsion, le microprocesseur 25 ferme sélectivement deux interrupteurs T1-T6 en fonction de la logique de commutation sélectionnée ;
- les signaux A, B, représentatifs notamment de la position du rotor 3, permettent, en fonction de la consigne de couple Γ, de piloter le courant Im alimentant le moteur 2 de sorte à limiter les modulations de celui-ci.

Dans un exemple particulier, la logique de commutation est commandée de sorte que le champ rotorique soit déphasé du champ statorique d'un angle compris entre 60° et 120° de sorte à optimiser le couple fourni par le moteur 2.

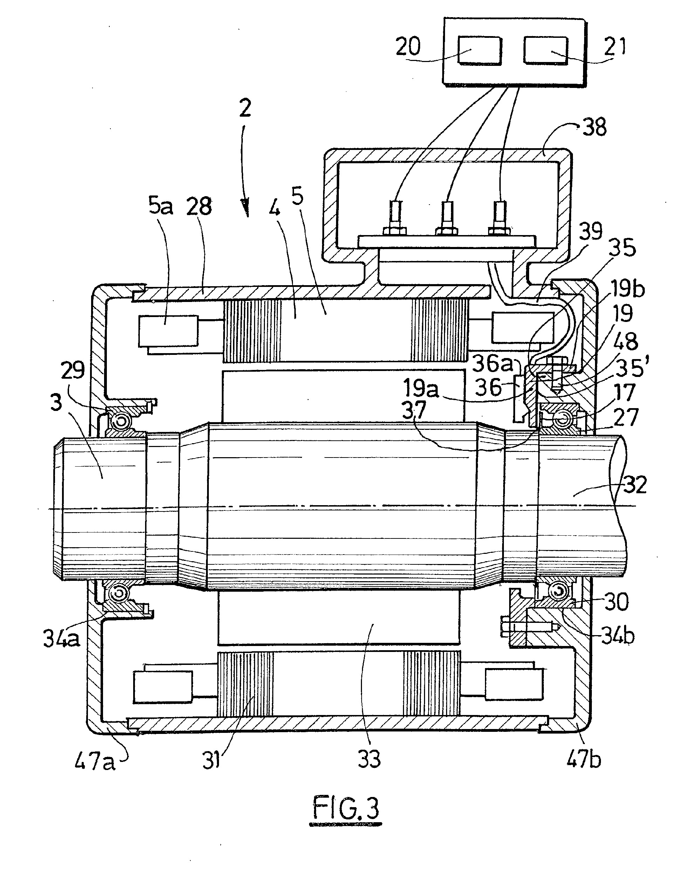

Selon une première réalisation (figure 3 et 6), le codeur 17 est associé à la bague tournante 27 d'un roulement permettant la rotation du rotor 3.

A cet effet, le codeur 17 peut être surmoulé sur une armature annulaire 37 emmanchée sur la bague intérieure 27.

Dans le mode de réalisation représenté sur la figure 3, le moteur 2 comprend un boîtier 28 dans lequel d'une part est logé le stator 4 de façon fixe et d'autre part est monté en rotation le rotor 3 par l'intermédiaire de deux roulements 29, 30.

Le stator 4 comprend des tôles de guidage 31 du flux sur lesquelles sont enroulées les bobines 5 avec, à chaque extrémité du stator 4, une tête de bobine 5a.

Le rotor 3, disposé à l'intérieur du stator 4, comprend un axe 32 sur la partie centrale duquel sont disposés les aimants 33 formant les N paires de pôles magnétiques.

De part et d'autre des aimants 33, la bague intérieure tournante d'un roulement 29, 30 est emmanchée sur l'axe 32 de sorte à assurer la rotation de celui-ci. A cet effet, les bagues extérieures des roulements 29, 30 sont disposées respectivement dans un logement 34a, 34b d'un flasque 47a, 47b associé au boîtier 28 pour être fixes par rapport à lui.

Le capteur 19 comprend d'une part un corps en matière plastique moulé 19a dans lequel les éléments sensibles ou l'ASIC sont intégrés et d'autre part un insert métallique 19b permettant l'association par vissage du capteur 19 sur une portée 35 du flasque 47.

Cette réalisation, en mettant en appui le capteur 19 sur les portées 35, 35', permet d'assurer la maîtrise du positionnement des éléments sensibles en regard et à distance d'entrefer du codeur 17.

En outre, un flasque 36 pourvu d'une ouverture 36a pour que le corps 19a puisse être positionné face au codeur 17 est serré contre la face externe de la bague extérieure par trois vis réparties à 120° les unes des autres afin de bloquer tout déplacement axial du roulement 30. Les déplacements du capteur 19 par rapport au codeur 17 sont empêchés par une vis 48.

En variante, on peut prévoir que le capteur 19 soit associé à la bague fixe du roulement 30 en assurant le positionnement des éléments sensibles en regard et à distance d'entrefer des pistes du codeur 17.

D'autres modes de réalisation de l'association d'un codeur 17 et d'un capteur 19 sur un roulement 30 peuvent être envisagés, notamment ceux décrits dans les documents FR-2 794 504 et FR-2 700 588 issus de la demanderesse.

Pour assurer l'interface d'entrée/sortie des différents signaux électriques, le boîtier 28 est pourvu d'un bornier 38 apte d'une part à alimenter le moteur 2 en courant et d'autre part à alimenter, par l'intermédiaire d'un câble 39, les signaux de sortie A, B, C du capteur 19 dans le dispositif de commande.

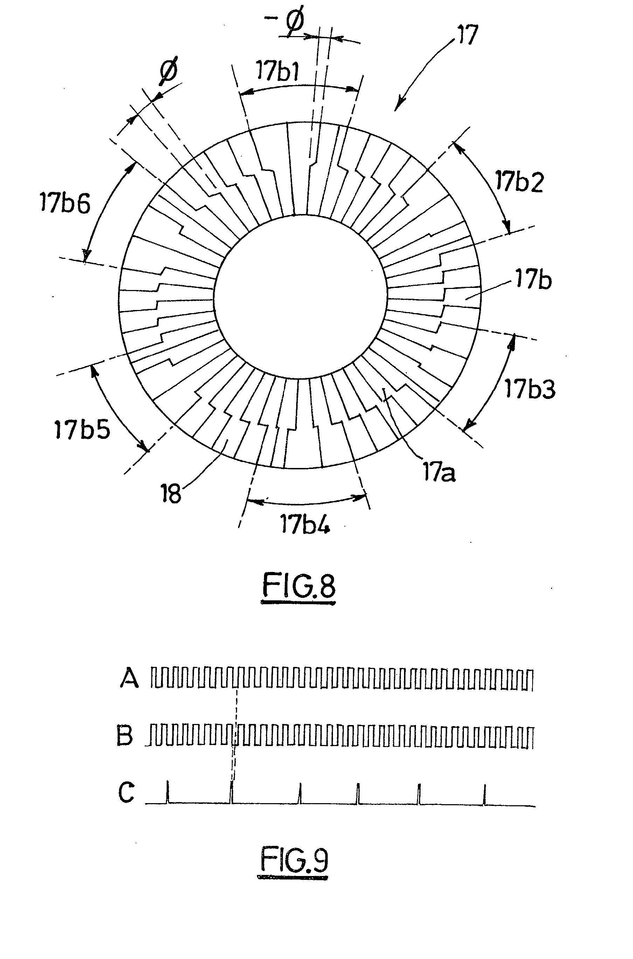

La figure 8 montre, dans le cadre de cette réalisation, un codeur 17 dont les pistes principale 17a, disposée vers l'intérieur de l'anneau, et de commutation 17b, disposée vers l'extérieur de l'anneau, comprennent 24 paires de pôles. Les paires de pôles 18 de la piste de commutation 17b sont en avance de phase d'une valeur φ, par exemple égale à un huitième de période, par rapport à celles de la piste principale 17a.

Dans ce cas où P=3 et N=1, la piste de commutation 17b comprend 6 singularités magnétiques 17b1-17b6 espacées de deux paires de pôles les unes des autres. Chaque singularité est formée de deux paires de pôles 18, la largeur des pôles étant agencée pour qu'ils soient respectivement déphasés de φ, 0, -φ et 0 par rapport aux pôles correspondants de la piste principale 17a. Ainsi, chaque impulsion du signal C correspond à la détection d'une inversion de déphasage entre la piste principale 17a et la piste de commutation 17b.

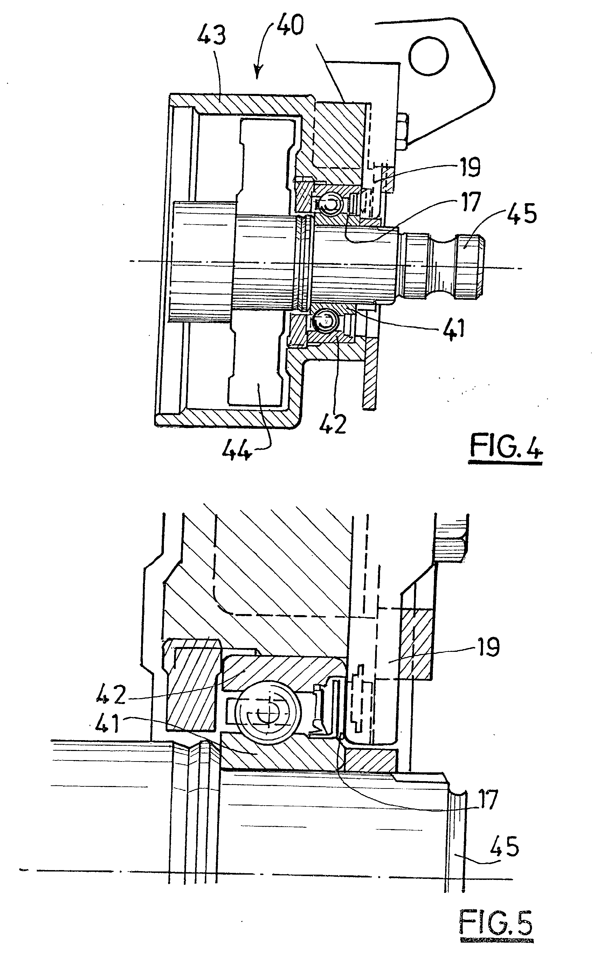

Selon une deuxième réalisation (figures 4 et 5), le système comprend, de façon classique, un réducteur 40 de rapport M entre la rotation du rotor 3 et celle de la colonne 1, c'est à dire que M tours de rotor 3 provoquent un tour de la colonne 1, et le codeur 17 est associé à la bague tournante 41 d'un roulement de sortie 42 du réducteur 40. Le réducteur 40 est associé au moteur 2 de sorte à former un motoreducteur.

Suivant cette réalisation, le codeur 17 doit comprendre 2*P*N*M singularités magnétiques de sorte que le signal C comprenne 2*P*N impulsions par tour de rotor 3.

Suivant la réalisation de la figure 4, le roulement 42 est instrumenté avec le codeur 17 et le capteur 19 de façon analogue au mode de réalisation de la figure 6.

Le réducteur 40 comprend un boîtier 43 dans lequel la roue de réduction 44 est disposée en rotation, ladite roue 44 étant associée en rotation par l'intermédiaire du roulement de sortie 42, à un arbre 45 destiné à appliquer l'effort sur la colonne 1.

Bien que la description ait été faite en relation avec un système de direction conventionnel comprenant une colonne de direction associée mécaniquement aux roues, elle peut être mise en oeuvre de façon analogue dans un système de direction découplée en prévoyant que le moteur applique un effort sur un organe tournant relié aux roues du véhicule.

## Revendications

1. Système de direction assistée électrique permettant d'appliquer un couple d'assistance pour le déplacement angulaire des roues d'un véhicule, ledit couple étant appliqué par un moteur à commutation électronique (2) comprenant P phases et N paires de pôles, ledit système comprenant en outre un dispositif de commande du moteur (2) comprenant :
- un codeur multipolaire circulaire (17) destiné à effectuer, conjointement au rotor (3) du moteur (2), une pluralité de tours autour de son axe de rotation, ledit codeur (17) comprenant une piste multipolaire principale (17a) et une piste multipolaire de commutation (17b) comprenant des singularités magnétiques (17b1-17b6) équiréparties angulairement, les pistes principale (17a) et de commutation (17b) étant concentriques sur le codeur (17) ;
- un capteur fixe (19) disposé en regard et à distance d'entrefer du codeur (17), ledit capteur (19) comprenant au moins trois éléments sensibles dont au moins deux sont positionnés en regard de la piste principale (17a) de sorte à délivrer des signaux digitaux A, B carrés en quadrature et au moins un est positionné en regard de la piste de commutation (17b) de sorte à délivrer un signal C sous forme de 2*P*N impulsions par tour du rotor (3) ;
- un circuit de commutation (20) des courants dans les enroulements de phase du moteur (2) comportant 2*P*N interrupteurs (T1-T6) ;
- un circuit de commande (21) du circuit de commutation (20) qui :
- à partir du signal C fournit des signaux de commutation des interrupteurs (T1-T6); et
- à partir des signaux A, B et en fonction d'une consigne de couple (Γ) définit une consigne de courant (Iref) qui pilote le courant (Im) alimentant les enroulements de phase du moteur (2).

2. Système selon la revendication 1, **caractérisé en ce que** le codeur (17) est associé à la bague tournante (27) d'un roulement (30) permettant la rotation du rotor (3), la piste de commutation (17b) comprenant 2*P*N singularités magnétiques (17b1-17b6).

3. Système selon la revendication 1, **caractérisé en ce qu'**il comprend, associé au moteur (2), un réducteur (40) de rapport M entre la rotation du rotor (3) et celle de la colonne (1), le codeur (17) étant associé à la bague tournante (41) d'un roulement de sortie (42) du réducteur (40) et la piste de commutation (17b) comprenant 2*P*N*M singularités magnétiques.

4. Système selon la revendication 2 ou 3, **caractérisé en ce que** le capteur (19) est associé à la bague fixe du roulement (30, 42) portant le codeur (17).

5. Système selon l'une quelconque des revendications 1 à 4, **caractérisé en ce qu'**il comprend une colonne de direction (1), le moteur (2) appliquant un effort sur l'arbre de transmission de la colonne (1).

6. Système selon l'une quelconque des revendications 1 à 4, **caractérisé en ce qu'**il comprend une colonne de direction (1) associée à un pignon de crémaillère (10), le moteur (2) appliquant un effort sur le pignon de crémaillère (10).

7. Système selon l'une quelconque des revendications 1 à 4, **caractérisé en ce qu'**il comprend une crémaillère de direction (11), le moteur (2) appliquant un effort sur ladite crémaillère (11) ou sur un organe (15) associé colinéairement à ladite crémaillère (11).

8. Système selon l'une quelconque des revendications 1 à 7, **caractérisé en ce que** le circuit de commande (21) comprend une boucle de régulation commandée par la consigne de courant (Iref) issue d'un circuit électronique (22), ledit circuit de commande (21) étant apte à moduler en largeur et en durée les signaux de commutation par l'intermédiaire d'une fonction logique ET (26).

9. Système selon l'une quelconque des revendications 1 à 8, **caractérisé en ce que** le circuit de commande (21) est réalisé sous la forme d'un microprocesseur (25) intégrant au moins une logique de commutation du circuit de commutation (20).

10. Système selon l'une quelconque des revendications 1 à 9, **caractérisé en ce que** le codeur (17) est formé d'un anneau magnétique multipolaire sur lequel est aimantée une pluralité de paires de pôles (18) Nord et Sud équirépartis avec une largeur angulaire constante de sorte à former les pistes principale (17a) et de commutation (17b), une singularité magnétique (17b1-17b6) étant formée de deux paires de pôles qui sont différentes des autres.

11. Système selon la revendication 10, **caractérisé en ce que** les éléments sensibles sont choisis parmi le groupe comprenant les sondes à effet Hall, les magnétorésistances, les magnétorésistances géantes.

12. Système selon l'une quelconque des revendications 1 à 9, **caractérisé en ce que** le codeur (17) est formé d'une cible sur laquelle les pistes de référence (17a) et de commutation (17b) ont été gravées de sorte à former un motif optique analogue à un motif magnétique multipolaire, les éléments sensibles étant alors formés de détecteurs optiques.

13. Système selon la revendication 11 ou 12, **caractérisé en ce que** le capteur (19) comprend une pluralité d'éléments sensibles alignés qui sont disposés en regard et à distance d'entrefer de la piste principale (17a).

14. Système selon l'une quelconque des revendications 1 à 13 **caractérisé en ce que** le capteur (19) comprend un interpolateur augmentant la résolution des signaux de sortie.

15. Système selon l'une quelconque des revendications 1 à 14, **caractérisé en ce que** le capteur (19) est intégré dans un circuit de type ASIC.
